# EUROPÄISCHE PATENTSCHRIFT

(11) **EP 0 295 529 B1**
(45) Veröffentlichungstag und Bekanntmachung des Hinweises auf die Patenterteilung: **13.10.1993**
(21) Anmeldenummer: 88109018.7
(22) Anmeldetag: 06.06.1988
(51) Int. Cl.: B29C 67/22, B29C 67/18, B29C 67/24

(54) **Vorrichtung und Verfahren zum Herstellen eines Kunststoff-Verbundteils**
Apparatus and method for producing plastic composite articles
Dispositif et procédé de fabrication d'articles composites en matière synthétique

(30) Priorität: 17.06.1987 DE 3720211
(43) Veröffentlichungstag der Anmeldung: 21.12.1988
(73) Patentinhaber: BAYER AG, 51368 Leverkusen (DE)
(72) Erfinder: Knipp, Ulrich, Dr., D-5060 Bergisch Gladbach 2 (DE); Ganster, Otto, Dr., D-5068 Odenthal-Hahnenberg (DE); Rentz, Bernhard, D-5090 Leverkusen 1 (DE)

(56) Entgegenhaltungen:
- EP-A- 0 013 882
- EP-A- 0 062 182
- FR-A- 2 140 076
- US-A- 922 007
- US-A- 4 155 969

## Beschreibung

Die Erfindung betrifft eine Vorrichtung und ein Verfahren zum Herstellen eines Kunststoff-Verbundteils durch zeitlich aufeinanderfolgendes Einbringen von mehreren Füllungen aus mindestens einem fließfähigen Reaktionsgemisch, von denen mindestens eines Schaumstoff bildet, in den Formhohlraum eines geschlossenen Formwerkzeuges, wobei dem Formwerkzeug eine Mischvorrichtung zugeordnet ist, deren Mischkopf in eine Mischkammer weisende Einspritzdüsen für die Reaktionskomponenten und einen Ausstoßkolben für die Reinigung der Mischkammer aufweist, welcher bis zu deren Auslaßöffnung vorschiebbar ist.

Häufig besteht Bedarf an Kunststoff-Verbundteilen, welche aus mehreren Schichten bestehen, insbesondere aus einem Schaumstoffkern mit elastischer, ungeschäumter Oberflächenschicht. Derartige Verbundteile finden beispielsweise bei Kraftfahrzeugen in Form von "soft faces", Stoßfängern oder in Form von Seitenschürzen Anwendung. In vielen Fällen wäre zwar eine einseitige Beschichtung ausreichend, aber die Praxis hat gezeigt, daß sich bei sehr unterschiedlichen Materialien das Verbundteil verzieht.

Gemäß DE-A-2 127 582 (entsprechend US-A 3 954 926) ist es bekannt, hier zumindestens zwei Mischköpfe einzusetzen, mit denen verschiedene Reaktionsgemische nacheinander eingebracht werden. Dabei ist jeder Seite des Formhohlraumes ein Mischkopf zugeordnet, so daß zwei Einfüllöffnungen vorhanden sind. Der durch die mindestens zwei Mischköpfe bedingte Aufwand ist erheblich.

Es besteht die Aufgabe, eine Vorrichtung und ein Verfahren zum Herstellen von Kunststoff-Verbundteilen der eingangs genannten Art zu schaffen, wobei ein Mischkopf genügt, um einwandfreie Kunststoff-Verbundteile herzustellen.

Gelöst wird die Aufgabe dadurch, daß gegenüber der Auslaßöffnung auf der anderen Seite des Formhohlraumes ein Verdrängerkolben angeordnet ist, welcher in Reinigungsstellung des Auslaßkolbens bis zu dessen Stirnfläche vorschiebbar ist und dessen zur Auslaßöffnung weisendes Ende eine Verjüngung aufweist.

Dadurch wird erreicht, daß bei gegebenenfalls zurückgeschobenem Verdrängerkolben zunächst eine erste Füllung für ein Kernmaterial eingebracht werden kann, beispielsweise ein Polyurethan-Schaumstoff bildendes Reaktionsgemisch. Spätestens, wenn diese erste Füllung in den Werkzeughohlraum eingebracht worden ist, wird der Verdrängerkolben mit seiner Stirnfläche bis gegen die Stirnfläche des Ausstoßkolbens geschoben. Nach Verfestigung der ersten Füllung wird die zweite Füllung eingefüllt. Sobald dieses auch verfestigt ist, wird der Verdrängerkolben zurückgezogen, und es kann eine dritte Füllung eingebracht werden.

Bei entsprechendem Druckaufbau im Formhohlraum durch die erste Füllung bildet bei gleichem schäumfähigen Reaktionsgemisch die zweite und dritte Füllung kompaktes oder nahezu kompaktes Material. Für die zweite und/oder dritte Füllung läßt sich aber auch ein unterschiedliches bzw. unterschiedliche Reaktionsgemisch(e) verwenden.

Infolge der Verjüngung des Verdrängerkolbens ergibt sich am Formteil eine Markierung, welche je nach gewählter Endstellung des Verdrängerkolbens eine Ausnehmung im Formteil und/oder eine vorstehende Marke bildet. Sofern eine solche Markierung bei der Verwendung des Formteils nachteilig ist, muß sie nachbearbeitet werden.

Vorzugsweise ist die Verjüngung kegelstumpfförmig gestaltet.

Diese Gestaltung ist sowohl fertigungstechnisch einfach als auch strömungstechnisch günstig.

Gemäß einer weiteren Ausführungsform ist die Verjüngung als Absatz gestaltet.

Diese Ausführungsform eignet sich insbesondere dazu, durch entsprechende Hubeinstellung des Verdrängerkolbens mittels der Absatzfläche die Stärke der umhüllenden Schicht vorzugeben, weil an dieser Absatzfläche das aus der Mischkammer austretende Reaktionsgemisch um 90° umgelenkt wird.

Es versteht sich, daß die Verjüngung auch jede andere geeignete Form aufweisen kann. Beispielsweise läßt sich die Verjüngung auch durch eine gekrümmte Fläche bilden. Die Verjüngung kann beispielsweise auch ovale Form oder pyramidenstumpfartige Form aufweisen, wobei die Seitenflächen ungleich lang und/oder die Seiten unter verschiedenem Winkel geneigt sind. Durch solche Gestaltung der Verjüngung läßt sich der aus der Mischkammer austretende Gemischstrom bei komplizierten Formwerkzeughohlräumen mengenmäßig in die verschiedenen Richtungen - den Erfordernissen entsprechend - aufteilen.

Besitzen die Kolben kreisförmigen Querschnitt, so ist es vorteilhaft, wenn bei einem Reinigungskolben vom Durchmesser D₃, einem Verdrängerkolben vom Durchmesser D₁ mit einer Stirnfläche vom Durchmesser D₂, D₂ < D₁ und D₂ < D₃ betragen. Der Verjüngungswinkel α beträgt ≦90°.

Das neue Verfahren zum Herstellen eines Kunststoff-Verbundteils geht aus von dem aufeinanderfolgenden Einbringen von mehreren Füllungen aus mindestens einem Reaktionsgemisch in einem Formhohlraum, von denen vorzugsweise die zuerst eingebrachte Füllung Schaumstoff bildet, mittels eines mit einem Ausstoßkolben versehenen Mischkopfes, dessen Auslaßöffnung in den Formhohlraum mündet.

Das Neue ist darin zu sehen, daß ein dem Ausstoßkolben auf der anderen Seite des Formhohlraumes gegenüber angeordneter, eine Verjüngung aufweisender Verdrängerkolben spätestens nach dem Einbringen einer ersten Füllung mit seiner Stirnfläche bis gegen den zwischenzeitlich in seine Reinigungsposition gefahrenen Ausstoßkolben bewegt wird; daß, nachdem die erste Füllung einen durchschlagfesten, aber noch kompressiblen Zustand erreicht hat, der Verdrängerkolben in eine solche Stellung gebracht wird, daß die nun einzubringende zweite Füllung entweder an der dem Mischkopf zugewandten Seite oder der dem Mischkopf abgewandten Seite zwischen die Formhohlraumwandung und die erste Füllung gepreßt wird; und anschließend der Verdrängerkolben in die andere Position gebracht und nach Erreichen eines gewünschten Aushärtezustandes der zweiten Füllung eine dritte Füllung auf die andere Seite der ersten Füllung zwischen diese und die Formhohlraumwandung gepreßt wird.

Je nach Menge der zweiten und dritten Füllung läßt sich auf diese Weise der durch die erste Füllung gebildete Kern beidseitig teilweise beschichten oder ganz einhüllen. Im Bereich der Kolben ist jedoch der Kern des Verbundteils von der zweiten Füllung durchdrungen und bildet infolge der Verjüngung des Verdrängerkolbens eine Markierung, welche nachbearbeitet werden muß, falls sie beim späteren Gebrauch des Verbundformteils störend sein würde.

Eine Variante des neuen Verfahrens besteht darin, daß auf die andere Seite der ersten Füllung nicht auch das zweite Reaktionsgemisch als dritte Füllung, sondern ein drittes Reaktionsgemisch aufgegeben wird, nachdem vorher der Verdrängerkolben erneut mit seiner Stirnfläche gegen den inzwischen wieder in Reinigungsstellung befindlichen Ausstoßkolben gefahren und erst zurückgefahren wird, nachdem das zweite Reaktionsgemisch einen gewünschten Verfestigungsgrad erreicht hat.

Diese Variante ist besonders dann sinnvoll, wenn eine Oberflächenseite eine Sichtfläche darstellt und aus einem speziellen hochwertigen Werkstoff bestehen soll, während die Rückseite mit einem minderwertigeren Werkstoff beschichtet werden kann, welcher lediglich jene Eigenschaften zu haben braucht, welche ein Verziehen des Formteils verhindern.

Als Reaktionsgemische für das Kernmaterial eignen sich insbesondere Polyurethan-Schaumstoff bildende oder Polyisocyanaturat-Schaumstoff bildende Reaktionskomponenten. Als weitere Reaktionsmischungen eignen sich insbesondere solche auf Basis von Epoxidharzen oder von ungesättigten Polyesterharzen.

Mit dem neuen Verfahren lassen sich Schaumstoff-Formkörper mit geschlossener Deckschicht erzeugen. Bis heute ist die dafür übliche Methode die sogenannte PUR-Integralschaumtechnik. Hierbei werden als notwendige niedrig siedende Lösungsmittel Fluorkohlenwasserstoffe benötigt, die aus ökologischen Gründen jedoch beanstandet werden. Beim neuen Verfahren kann aus diese Stoffe verzichtet werden, denn als Treibgas läßt sich das aus der Isocyanat-Wasser-Reaktion entstehende Kohlendioxid nutzen.

Es ist auch möglich, vor der Durchführung des neuen Verfahrens Armierungen, z. B. eine Glasfasermatte, im Formhohlraum anzuordnen, welche später im Formteil eingebettet ist.

In der Zeichnung ist die neue Vorrichtung in zwei Ausführungsbeispielen rein schematisch in mehreren Figuren im Schnitt dargestellt und nachstehend näher erläutert.
Es zeigen:
- Fig. 1 bis 6: eine geeignete Ausführungsform der Vorrichtung, und zwar in verschiedenen Stadien des Füllvorganges des Formhohlraumes und
- Fig. 7: die neue Vorrichtung gemäß einem zweiten Ausführungsbeispiel.

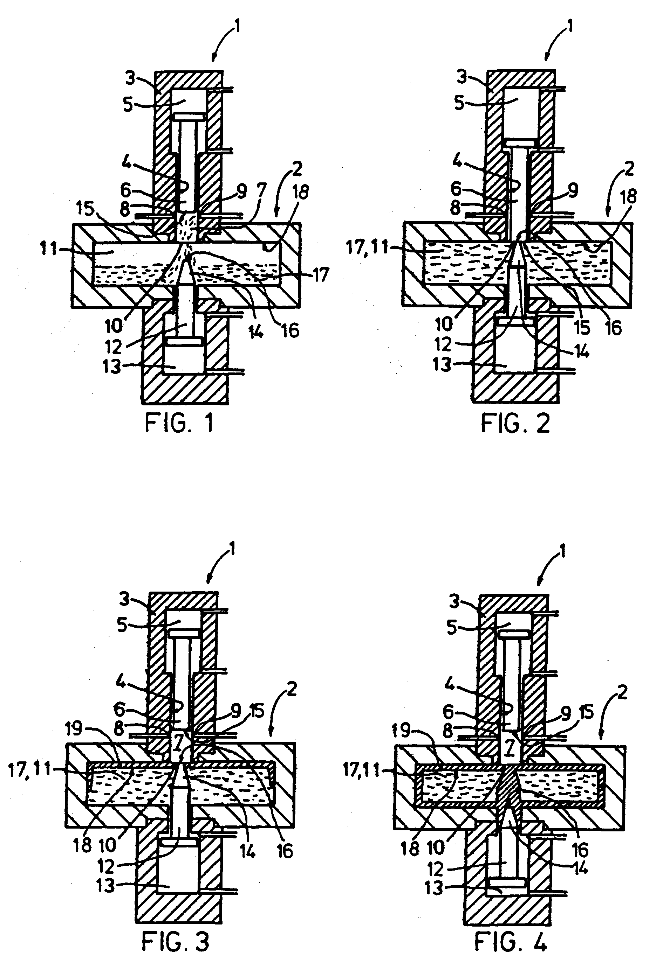

In Fig. 1 bis 6 besteht die Vorrichtung aus einer Mischvorrichtung, von welcher nur der Mischkopf 1 gezeigt ist, und einem Formwerkzeug 2. Der Mischkopf 1 besteht aus einem Gehäuse 3 mit einer Führungsbohrung 4 für einen mit einem hydraulischen Antrieb 5 betätigbaren Ausstoßkolben 6, welcher eine Mischkammer 7 freigibt oder ausfüllt. In diese Mischkammer 7 münden Einspritzöffnungen 8, 9, welche mit nicht dargestellten Behältern für die fließfähigen Reaktionskomponenten zum Herstellen der verschiedenen Reaktionsgemische verbindbar sind. Der Mischkopf 1 ist an das Formwerkzeug 2 angebaut, und die Auslaßöffnung 10 der Mischkammer 7 mündet unmittelbar in den Formhohlraum 11. Dieser Auslaßöffnung gegenüberliegend ist ein Verdrängerkolben 12 mit hydraulischem Antrieb 13 angeordnet. Die hydraulischen Antriebe 5 und 13 sind an eine nicht dargestellte hydraulische Steuerung angeschlossen, welche nach vorgegebenem Programm arbeitet. Das freie Ende des Verdrängerkolbens 12 weist eine kegelstumpfförmige Verjüngung 14 auf. Die Stirnfläche des Ausstoßkolbens ist mit 15 bezeichnet, die Stirnfläche des Verdrängerkolbens mit 16.

In Fig. 1 befindet sich der Ausstoßkolben 6 in Mischstellung und der Verdrängerkolben 12 in einer zurückgezogenen Position, die den Eintrag des ersten Reaktionsgemisches 17 ermöglicht.

Fig. 2 zeigt die Stellung von Ausstoßkolben 6 und Verdrängerkolben 12 nach dem Einbringen der ersten Füllung 17, bestehend aus einem schäumfähigen Reaktionsgemisch. Solange diese erste Füllung 17 noch flüssig ist, werden beide Kolben 6, 12 gegeneinander geschoben, bis sie sich in Höhe der Auslaßöffnung 10 mit ihren Stirnflächen 15, 16 berühren, damit auch nach dem Verfestigen der ersten Füllung 17, welche zu einem Polyurethan-Schaumstoffkern 17 aufschäumt, ein Durchgang für das zweite Reaktionsgemisch (zweite Füllung) verbleibt.

Nachdem der PU-Schaumstoffkern 17 einen durchschlagfesten, aber noch kompressiblen Zustand erreicht hat, wird der Ausstoßkolben 6 zurückgefahren, während der Verdrängerkolben 12 in seiner Stellung belassen wird. Für ein zweites Reaktionsgemisch (zweite Füllung) werden nun durch die Einspritzöffnungen 8, 9 ein PU-Elastomer bildende Komponenten eingeführt. Aufgrund der Abstimmung der Durchmesser von Ausstoßkolben 6 und Verdrängerkolben 12 und von dessen Stirnfläche 16 dringt diese zweite Füllung zwischen die Wandung 18 des Formhohlraumes 11 und den Schaumstoffkern 17 ein und bildet eine Schicht 19, wie in Fig. 3 dargestellt.

Ist die zweite Füllung verfestigt, wird der Verdrängerkolben 12 in die in Fig. 4 dargestellte Position zurückgefahren und das dritte Reaktionsgemisch (dritte Füllung) dosiert, so daß der freigegebene Raum gefüllt und der Schaumstoffkern 17 auf der anderen Seite beschichtet wird.

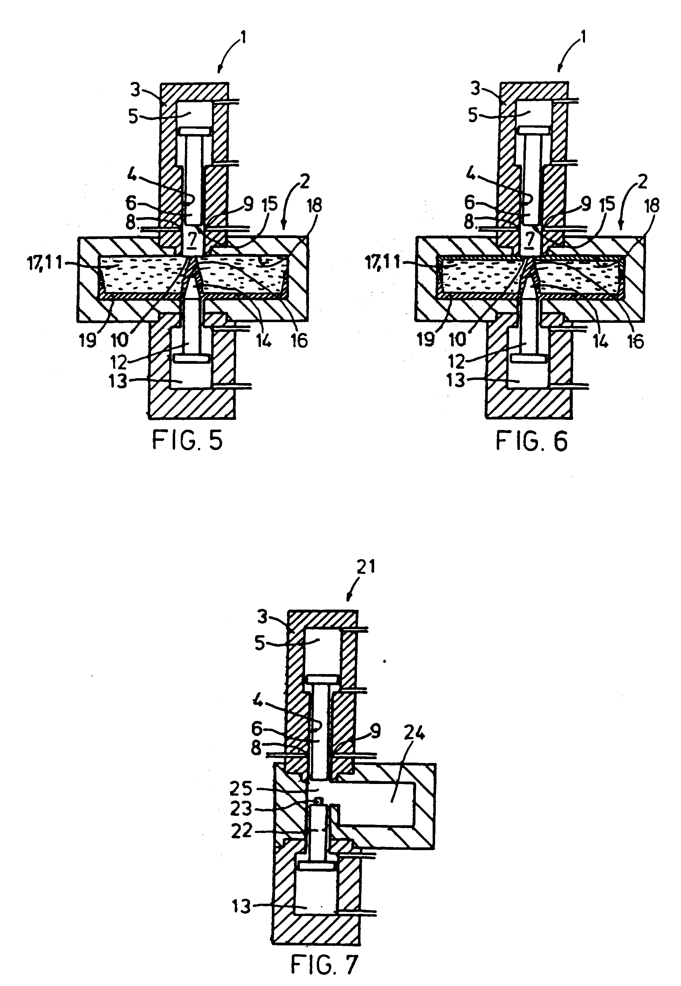

Fig. 5 und 6 zeigen eine andere Reihenfolge der Schritte beim Einbringen des zweiten Reaktionsgemisches (zweite Füllung):
Hierbei werden nach dem Erreichen des kompressiblen, aber durchschlagfesten Zustandes der ersten Füllung der Ausstoßkolben 6 und der Verdrängerkolben 12 in die in Fig. 5 gezeigte Position gefahren, wodurch das zweite Reaktionsgemisch (zweite Füllung) zunächst auf die dem Mischkopf 1 abgewandte Seite zwischen Schaumstoffkern 17 und Wandung 18 des Formhohlraumes 11 gepreßt wird und eine Beschichtung 19 bildet.

Nach Verfestigung des zweiten Reaktionsgemisches (zweite Füllung) wird in der Position des Verdrängerkolbens gemäß Fig. 5 das dritte Reaktionsgemisch (dritte Füllung) eingefüllt. Unter Kompression des Schaumstoffkerns 17 bildet sich die dem Mischkopf 1 zugewandte Deckschicht 18 aus, wie in Fig. 6 dargestellt. Als dritte Füllung kann auch eine entsprechende weitere Menge an zweitem Reaktionsgemisch angebracht werden.

Das Ausführungsbeispiel gemäß Fig. 7 unterscheidet sich von demjenigen gemäß Fig. 1 bis 6 lediglich dadurch, daß der Mischkopf 21 und der Verdrängerkolben 22, welcher hier einen Absatz als Verjüngung 23 aufweist, derart zum Formhohlraum 24 angeordnet sind, daß ein seitlicher Anguß 25 entsteht. Der Verfahrensablauf läßt sich in der gleichen Weise, wie zu Fig. 1 bis 6 beschrieben, durchführen.

## Patentansprüche

1. Vorrichtung zum Herstellen eines Kunststoff-Verbundteils durch zeitlich aufeinanderfolgendes Einbringen von mehreren Füllungen aus mindestens einem fließfähigen Reaktionsgemisch, von denen mindestens eines Schaumstoff bildet, in den Formhohlraum (11, 24) eines geschlossenen Formwerkzeuges (2), wobei dem Formwerkzeug (2) eine Mischvorrichtung zugeordnet ist, deren Mischkopf (1, 21) in eine Mischkammer (7) weisende Einspritzdüsen (8, 9) für die Reaktionskomponenten und einen Ausstoßkolben (6) für die Reinigung der Mischkammer (7) aufweist, welcher bis zu deren Auslaßöffnung (10) vorschiebbar ist, dadurch gekennzeichnet, daß gegenüber der Auslaßoffnung (10) auf der anderen Seite des Formhohlraumes (11, 24) ein Verdrängerkolben (12, 22) angeordnet ist, welcher in Reinigungsstellung des Ausstoßkolbens (6) bis zu dessen Stirnfläche (15) vorschiebbar ist und dessen zur Auslaßoffnung (10) weisendes Ende eine Verjüngung (14, 23) aufweist.

2. Vorrichtung nach Anspruch 1, dadurch gekennzeichnet, daß die Verjüngung (14) kegelstumpfartig gestaltet ist.

3. Vorrichtung nach Anspruch 1, dadurch gekennzeichnet, daß die Verjüngung (23) als Absatz (23) gestaltet ist.

4. Vorrichtung nach einem der Ansprüche 1, 2 oder 3, dadurch gekennzeichnet, daß die Kontur der Stirnfläche (16) des Verdrängerkolbens (12) kleiner ist als diejenige der Stirnfläche (15) des Ausstoßkolbens (6).

5. Verfahren zum Herstellen eines Kunststoff-Verbundteils durch aufeinanderfolgendes Einbringen von mehreren Füllungen aus mindestens einem Reaktionsgemisch in einen Formhohlraum (11), von denen vorzugsweise die zuerst eingebrachte Füllung Schaumstoff bildet, mittels eines mit einem Ausstoßkolben (6) versehenen Mischkopfes (1), dessen Auslaßoffnung (10) in den Formhohlraum (11) mündet, dadurch gekennzeichnet, daß ein dem Ausstoßkolben (6) auf der anderen Seite des Formhohlraumes (11) gegenüber angeordneter, eine Verjüngung (14) aufweisender Verdrängerkolben (12) spätestens nach dem Einbringen einer ersten Füllung mit seiner Stirnfläche (16) bis gegen die Stirnfläche (15) des zwischenzeitlich in seine Reinigungsposition gefahrenen Ausstoßkolbens (6) bewegt wird; daß, nachdem die erste Füllung einen durchschlagfesten, aber noch kompressiblen Zustand erreicht hat, der Verdrängerkolben (12) in eine solche Stellung gebracht wird, daß die nun einzubringende zweite Füllung entweder an der dem Mischkopf (1) zugewandten Seite oder der dem Mischkopf (1) abgewandten Seite zwischen die Formhohlraumwandung (18) und die erste Füllung (17) gepreßt wird; und anschließend der Verdrängerkolben (12) in die andere Position gebracht und nach Erreichen eines gewünschten Aushärtegrades der zweiten Füllung eine dritte Füllung auf die andere Seite der ersten Füllung (17) zwischen diese und die Formhohlraumwandung (18) gepreßt wird.

6. Verfahren nach Anspruch 5, dadurch gekennzeichnet, daß auf die andere Seite der ersten Füllung (17) eine dritte Füllung aufgegeben wird, nachdem vorher der Verdrängerkolben (12) erneut mit seiner Stirnfläche (16) gegen den inzwischen wieder in Reinigungsstellung befindlichen Ausstoßkolben (6) gefahren und erst zurückgefahren wird, nachdem die zweite Füllung einen gewünschten Verfestigungsgrad erreicht hat.

## Claims

1. Apparatus for producing a plastic composite article by successive applications of a plurality of fillings of at least one flowable reaction mixture, at least one filling forming a foam, into the moulding cavity (11, 24) of a closed moulding tool (2), a mixing device being associated with the moulding tool (2), the mixing head (1, 21) of the said mixing device comprising injection nozzles (8, 9) opening into a mixing chamber (7) for the reaction components and an ejector piston (6) for cleaning the mixing chamber (7), which can be advanced up to the outlet opening (10) of the said mixing chamber, characterised in that a displacement piston (12, 22) is arranged opposite the outlet opening (10) on the other side of the moulding cavity (11, 24), can be advanced up to the front face (15) of the ejector piston (6) when the latter is in the cleaning position and whose end facing the outlet opening (10) comprises a constriction (14, 23).

2. Apparatus according to claim 1, characterised in that the constriction (14) is frustum-shaped.

3. Apparatus according to claim 1, characterised in that the constriction (23) is constructed as a step (23).

4. Apparatus according to one of claims 1, 2 or 3, characterised in that the contour of the front face (16) of the displacement piston (12) is smaller than that of the front face (15) of the ejector piston (6).

5. Method for producing a plastic composite article by successive applications of a plurality of fillings of at least one reaction mixture into a moulding cavity (11), preferably the firstly applied filling forming a foam, by means of a mixing head (1) which is provided with an ejector piston (6) and whose outlet opening (10) opens into the moulding cavity (11), characterised in that a displacement piston (12) arranged opposite the ejector piston (6) on the other side of the moulding cavity (11) and comprising a constriction (14) is displaced at the latest after the application of a first filling with its front face (16) up to the front face (15) of the ejector piston (6), which in the meantime has been driven into its cleaning position; in that, once the first filling has reached a puncture-proof but still compressible state, the displacement piston (12) is moved into a position so that the second filling which is to be applied is pressed either onto the side facing the mixing head (1) or onto the side remote from the mixing head (1) between the moulding cavity wall (18) and the first filling (17); and subsequently the displacement piston (12) is moved into the other position and once the second filling has reached a desired degree of hardness a third filling is pressed onto the other side of the first filling (17) between the latter and the moulding cavity wall (18).

6. Method according to claim 5, characterised in that a third filling is delivered onto the other side of the first filling (17) after the displacement piston (12) has previously been driven again with its front face (16) towards the ejector piston (6) again located in its cleaning position and only withdrawn once the second filling has reached a desired degree of hardness.

## Revendications

1. Dispositif pour la préparation d'un élément composite en matière synthétique par introduction successive de plusieurs matières de charge à partir d'au moins un mélange réactionnel apte à l'écoulement, dont au moins une forme de la mousse, dans la cavité de moule (11, 24) d'un moule fermé (2), un dispositif de mélange étant attribué au moule (2), dont la tête de mélange (1, 21) présente des tuyères d'injection (8, 9) orientées vers une chambre de mélange (7) et destinées aux composants réactionnels, ainsi qu'un piston d'expulsion (6) pour le nettoyage de la chambre de mélange (7), qui peut coulisser jusqu'à l'ouverture d'évacuation (10) de cette dernière, caractérisé en ce que, face à l'ouverture d'évacuation (10) sur l'autre côté de la cavité de moule (11, 24), est disposé un piston de déplacement (12, 22) qui peut s'avancer jusqu'à la face frontale (15) du piston d'expulsion (6) lorsque ce dernier se trouve dans sa position de nettoyage et dont l'extrémité tournée vers l'ouverture d'évacuation (10) présente un rétrécissement (14, 23).

2. Dispositif selon la revendication 1, caractérisé en ce que le rétrécissement (14) a une forme tronconique.

3. Dispositif selon la revendication 1, caractérisé en ce que le rétrécissement (23) est réalisé en forme de réduction (23).

4. Dispositif selon la revendication 1, 2 ou 3, caractérisé en ce que le contour de la face frontale (16) du piston de déplacement (12) est plus petit que celui de la face frontale (15) du piston d'expulsion (6).

5. Procédé pour la préparation d'un élément composite en matière synthétique par introduction successive de plusieurs matières de charge à partir d'au moins un mélange réactionnel dans une cavité de moule (11), de préférence la première matière de charge introduite formant de la mousse, au moyen d'une tête de mélange (1) munie d'un piston d'expulsion (6) dont l'ouverture d'évacuation (10) débouche dans la cavité de moule (11), caractérisé en ce qu'un piston de déplacement (12), disposé face au piston d'expulsion (6) de l'autre côté de la cavité de moule (11) et présentant un rétrécissement (14), se déplace, au plus tard après l'introduction d'une première matière de charge, sa face frontale (16) venant se disposer contre la face frontale (15) du piston d'expulsion (6) qui s'est déplacé entre-temps pour prendre sa position de nettoyage; en ce que, après que la première matière de charge a atteint un état résistant aux chocs, tout en restant compressible, on amène le piston de déplacement (12) dans une position telle que la deuxième matière de charge à introduire à ce moment est pressée, soit contre le côté tourné vers la tête de mélange (1), soit contre le côté qui se détourne de la tête de mélange (1) entre la paroi de cavité de moule (18) et la première matière de charge (17); et ensuite, on amène le piston de déplacement (12) dans l'autre position, et après que la deuxième matière de charge a atteint un degré de durcissement désiré, on presse une troisième matière de charge contre l'autre côté de la première matière de charge (17) entre cette dernière et la paroi de cavité de moule (18).

6. Procédé selon la revendication 5, caractérisé en ce qu'on alimente une troisième matière de charge de l'autre côté de la première matière de charge (17), après que le piston de déplacement (12) ne se soit d'abord à nouveau déplacé pour venir se disposer avec sa face frontale (16) contre le piston d'expulsion (6) qui, entre-temps, a retrouvé sa position de nettoyage, et ne soit ensuite retourné qu'après que la deuxième matière de charge a atteint un degré de durcissement désiré.
